# EUROPEAN PATENT APPLICATION

(11) **EP 4 717 968 A1**
(43) Date of publication of application: **01.04.2026**
(21) Application number: 25203970.6
(22) Date of filing: 23.09.2025
(51) Int. Cl.: F16P 3/14, F16P 3/08

(54) **SAFETY DEVICE AND PROCEDURE**

(30) Priority: 25.09.2024 IT 202400021312
(71) Applicant: Pizzato Elettrica S.r.l., 36063 Marostica (Vicenza) (IT)
(72) Inventor: PIZZATO, Marco, 36063 MAROSTICA (VI) (IT); PIZZATO, Giuseppe, 36063 MAROSTICA (VI) (IT)
(74) Representative: Studio Torta S.p.A.

(57) **Abstract**

Safety device (1) configured to detect a hazardous situation in an industrial machine or plant (100) comprising: sensor means (11) for detecting parameters (K) associated with the hazardous situation, transmission means (12) for safely transmitting a safety signal (S), a processing unit (13) having a deterministic portion (131) for processing at least a first part (K1) of the parameters (K) in accordance with a deterministic model and a probabilistic portion (132) for processing at least a second part (K2) of the parameters (K) in accordance with a probabilistic model.

## Description

### CROSS-REFERENCE TO RELATED APPLICATIONS

This patent application claims priority from Italian patent application no. 102024000021312 filed on September 25, 2024, the entire disclosure of which is incorporated herein by reference.

### TECHNICAL FIELD

The present invention relates, for example but without limitation to generality, to a safety device for industrial machines or plants and a related safety process.

### STATE OF THE ART

As is known, an industrial machine or installation, hereafter referred to as a machine, that presents a hazardous condition during its operation is generally equipped with safety devices that inhibit the operation of the machine should a dangerous situation occur for an operator.

For example, such a hazardous condition occurs when machine parts are in motion, under pressure and/or at high temperature and within easy reach of an operator.

Examples of safety devices are scanners, radars, TOF (Time Of Flight) or 3D cameras that monitor an area around the machine to inhibit its operation if they detect an operator or an unauthorised object in the vicinity of the machine.

Generally, such safety devices comprise radar, TOF or optical sensors, and the signal to inhibit or allow machine operation is transmitted on the basis of the deterministic comparison of the values detected by these sensors, possibly reprocessed, with predetermined thresholds.

However, situations may arise where the data collected or the predetermined thresholds set are not sufficient to detect a potentially dangerous situation for an operator.

In fact, the deterministic comparison of the measured values with the predetermined thresholds does not allow for more analysis, e.g. probabilistic analysis, of the data collected by the sensors with the risk of not detecting a potentially dangerous situation.

However, this deterministic threshold operation is actually imposed by national and international regulations on the functional safety of industrial machinery that govern its design. In fact, it is well known that every safety device must declare a minimum level of reliability also calculated on the basis of the probability of error and failure of the device. It is clear that calculating the probability of error or failure of a device that deterministically analyses data collected from sensors is advantageous and much simpler than calculating the probability of error or failure of a device that probabilistically analyses data collected from sensors.

The aim of the present invention is therefore to provide a safety device that enables the analysis capacity of data collected by sensors to be increased without reducing the reliability level of the safety device.

Another purpose of the present invention is to realise a safety device and to develop a safety procedure to increase safety for an operator.

### SUMMARY OF THE INVENTION

In accordance with the aforementioned objectives, according to the present invention a safety device is provided as defined in claim 1 and preferably, but not necessarily, in any of the claims dependent thereon.

The claims describe preferred forms of embodiment of the present invention and form an integral part of this description.

### BRIEF DESCRIPTION OF THE DESIGNS

In the following, certain forms of implementation of the invention will be described for a better understanding of the invention by way of non-limiting example and with reference to the attached figures, in which
- Figure 1 is a schematic top view of a machine protected by an enclosure to which a safety device according to the present invention is associated;
- Figure 2 is a schematic of the safety device according to an embodiment of the present invention;
- Figure 3 is a schematic of the safety device according to another embodiment of the present invention.

### FORMS OF IMPLEMENTING THE INVENTION

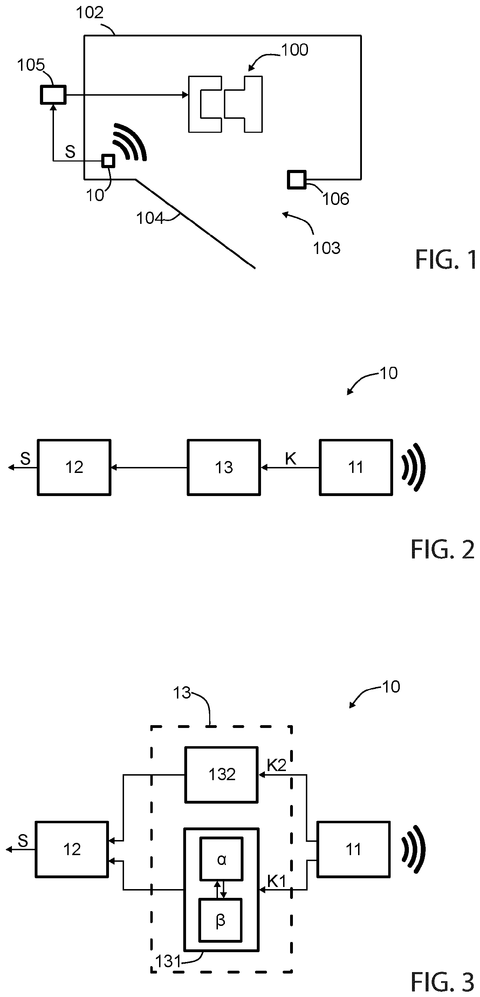

Referring to the example illustrated in Figure 1, number 10 denotes a safety device according to the present invention configured to detect a hazardous condition for an operator of a machine 100 or industrial plant, hereinafter only machine 100, and activate a safety function of the same when the hazardous condition is present.

In this description and in the claims, a hazardous condition is understood to be a condition in which, if the 100 machine were started up or continued its operation, an operator could come into contact with a hazardous element of the 100 machine.

For example, but without limitation to generality, with reference to Figure 1, in the case of a machine 100 surrounded by a protective barrier 102 provided with an access 103 protected by a movable guard 104, a hazardous condition exists when an operator can approach the machine 100 when it is in operation. For example, when the movable guard 104 allows an operator to pass the access 103 and approach the machine 100. In fact, in this case, if the machine 100 were to be started with the movable guard 104 allowing an operator to pass the access 103 and approach the machine 100, the operator could come into contact with a dangerous element of the machine 100 such as, for example, a moving, pressurised or hot organ or other.

Referring to Figure 2, the safety device 10 comprises sensor means 11 configured to detect parameters K associated with the hazardous condition, a processing unit 13 configured to detect the hazardous condition based on the parameters K, and transmission means 12 controlled by the processing unit 13 and configured to safely transmit (e.g. as defined in European standards EN61508, EN62061, EN134849-1) a safety signal S to activate the safety function of the machine 100. For example, the safety signal S enables or inhibits the operation of the machine 100.

The choice of sensor means 11 depends on the type of safety device 10, i.e. the dangerous condition that is to be detected and the way in which it is detected.

By way of example, the sensor means 11 may comprise proximity sensors of a safety switch 106 associated with access 103 to detect whether an actuator (not shown) associated with the guard 104 is in proximity to the safety switch.

In this case, the half-sensors 11 detect the dangerous condition when the actuator is not in proximity of the safety switch 106, i.e. when the movable guard 104 is open. In this case, the parameters K comprise data relating to the signal transmitted from the actuator to the safety switch and detected by the proximity sensor.

Alternatively, or additionally, the safety switch 106 may include a locking mechanism for locking the actuator (not shown) in contact with the safety switch. The locking mechanism may have a locking position in which it locks the actuator in contact with the safety switch and an unlocking position in which it allows the actuator to move away from the safety switch 106. In this case, the sensor means 11 may comprise position sensors to detect the lock mechanism position and detect the dangerous condition when the lock mechanism is in the unlocked position, i.e. when the movable guard 104 is, or can be, opened. In this case, the parameters K comprise signals transmitted by the position sensors of the locking mechanism.

Alternatively, sensor means 11 comprise voltage sensors of the supply of an electric motor of the machine 100 or the current drawn by it. In this case, a hazardous condition exists if the motor current or voltage does not meet predetermined parameters. In this case, the K-parameters include voltage or current values measured over time.

Or, sensor means 11 comprise means of detecting the speed or position of a machine 100 load being moved by an electric motor configured to detect its speed. In this case, a hazardous condition exists if the load is in motion or if its speed does not comply with predetermined parameters. In this case, the K-parameters include the speed values measured over time.

In other embodiments, sensor means 11 may include optical sensors, radar, tof (time of flight), 2D, 3D cameras and others configured to monitor the machine 100 and an area surrounding it to detect the presence of foreign objects or an operator. In this case, a dangerous condition exists if an operator or foreign object is in the monitored area. In this case, K-parameters include two-dimensional images captured by optical sensors or three-dimensional images captured by 3D or tof cameras, or point clouds detected by radar sensors.

The person skilled in the art readily understands that the sensor means 11 can also be very different from those described here, depending on the dangerous condition to be detected, without departing from the scope of the present invention.

The transmission means 12 are configured to securely transmit the safety signal S to a control device 105 (fig. 1) of a supervisory system of a large plant in which the machine 100 is inserted, or to the machine 100 itself.

By way of example, if the safety signal S indicates that the hazardous condition exists, the safety function of machine 100 is activated. Conversely, if the safety signal S indicates that the hazardous condition does not exist, the operation of the 100 machine is permitted.

Exemplarily, the transmission means 12 are configured to switch from an active state to an inactive state, or vice versa, when the sensor means 11 detect the hazardous condition. In these embodiments, the transmission means 12 comprise a pair of secure electronic outputs of the OSSD (Output Signal Switching Device) type driven by the processing unit 13.

By way of example only, an OSSD safe output in the active state transmits a signal and assumes a logical state of '1' or 'ON' while in the inactive state it transmits no signal and assumes a logical state of '0' or 'OFF'.

Alternatively, or in addition, the transmission means 12 may be driven by the processing unit 13 to generate digital signals, i.e. sequences of bits, encoding a telegram according to a communication protocol. The communication protocol may be of a known types such as, for example, IO-Link, Profinet, EtherCAT,EtherNet/IP, IO-Link Safety, Profisafe, CIP Safety, Safety over EtherCAT (FSoE), etc. or any other protocol assimilated communication protocol. In this case, some bits of the telegram encode information about the dangerous condition detected by the processing unit 13.

Preferably, the telegram also includes validation bits (CRC, watchdog, numbers consecutive numbers with respect to previously transmitted) configured to guarantee the integrity of the telegram itself, generated as a function of the other bits in the telegram and/or according to previously transmitted telegrams.

The processing unit 13 is configured to process the parameters K detected by the sensors 11 in order to detect the dangerous condition. Furthermore, the processing unit 13 is configured to control the transmission means 12 in order to transmit the safety signal S if the dangerous situation is detected.

In accordance with an aspect of the present invention, the processing unit 13 includes a deterministic portion 131 configured to process at least a first portion K1 of the K parameters in accordance with a deterministic model. Further, the processing unit 13 further comprises a probabilistic portion 132 configured to process at least a second portion K2 of the K parameters in accordance with a probabilistic model.

Preferably, the deterministic portion 131 is distinct and separate from the probabilistic portion 132.

The first part K1 of the parameters K may be equal to the second part K2, or it may be only partially equal to the second part K2, or it may be completely different from the second part K2.

In accordance with a preferred embodiment, the processing unit 13 is configured to command the transmission means 12 to activate the safety function of the machine 100 if at least one of the deterministic portion 131 and the probabilistic portion 132 detects a dangerous situation.

In realisation forms, the probabilistic portion 132 is configured to run a model that includes a neural network, or a support vector machine, or a logistic regression, or a decision tree, or a Bayesian classifier model, or a first k-kin classifier model, or Random Forest models, or Gradient Boosting models, or Hidden Markov models (HMM), or Gaussian Mixture models (GMM), or Expectation-Maximisation (EM) models, or Recurrent Neural Networks (RNN) models.

Instead, the deterministic portion 131 comprises a classifier based on the comparison of the first K1 part of the K parameters with predetermined thresholds.

Even more preferably, in accordance with the forms of realisation of figure 3, the deterministic portion 131 has a dual-channel fail-safe architecture and comprises a first α calculation unit and a second β calculation unit linked together in a redundant manner.

Preferably, the processing unit 13 is configured to activate the probabilistic portion 132 only when the deterministic portion 131 does not detect the hazardous condition. In this way, the probabilistic portion 132 only intervenes if the deterministic portion 131 would have already consented to the start-up of the machine 100. Advantageously, this simplifies the certification procedures of the safety device 10 according to national and international standards on functional safety of machinery since the probabilistic portion 132 would only intervene to further verify the safe condition of the machine also in accordance with a probabilistic model, only after the deterministic portion 131 has already given its consent to the start of the machine 100.

In this way, safety device 10 increases the safety level of machines or industrial plants while maintaining the reliability level of traditional safety devices.

The present invention also relates to a safety process executable by the device 10 according to the present invention to detect a dangerous situation in a machine 100 and to activate a safety function if the dangerous situation is detected.

The safety procedure involves detecting the K-parameters of machine 100 associated with the hazardous situation by means of sensors.

In addition, the safety procedure involves processing the K-parameters by processing unit 13 in order to detect the dangerous situation.

The procedure also involves safely transmitting a safety signal S to activate a safety function of machine 100 if the dangerous condition is detected.

In accordance with one aspect of the present invention, at least a first part K1 of the K-parameters is worked out in accordance with a deterministic model and at least a second part K2 of the K-parameters is worked out in accordance with a probabilistic model.

The safety signal S is transmitted if at least one of the deterministic model processing and the probabilistic model processing detects the dangerous situation.

In preferred forms of realisation, the second K2 part of the K-parameters is only processed in accordance with the probabilistic model if a previous processing of the first K1 part of the K-parameters in accordance with the deterministic model does not detect the hazardous situation.

## Claims

1. Safety device (10) configured to detect a hazardous situation in an industrial machine or plant (100) and to activate a safety function of said machine (100) if said hazardous situation is detected, wherein said device (10) comprises:
• sensor means (11) configured to detect parameters (K, K1, K2) of said machine or industrial plant (100) associated with said hazardous situation;
• transmission means (12) configured to safely transmit a safety signal (S) to activate the safety function of said industrial machine (100);
• a processing unit (13) configured to process said parameters (K) in order to detect said dangerous situation and to control said transmission means (12) in order to transmit said safety signal (S);
**characterised in that** said processing unit (13) comprises a deterministic portion (131) configured to process at least a first part (K1) of said parameters (K) in accordance with a deterministic model and a probabilistic portion (132) configured to process at least a second part (K2) of said parameters (K) in accordance with a probabilistic model.

2. Safety device (1) as in claim 1, **characterised in that** said processing unit (13) is configured to control said transmission means (12) to transmit said safety signal (S) in order to activate a safety function of said machine (100) if at least one of said deterministic portion (131) and said probabilistic portion (132) detects said dangerous situation.

3. Safety device (1) as in claim 1 or 2, **characterised in that** said probabilistic portion (132) comprises a neural network, or a support vector machine, or a logistic regression, or a decision tree, or a Bayesian classifier model or an early k-vini classifier model, or Random Forest models, or Gradient Boosting models, or Hidden Markov models (HMM), or Gaussian Mixture models (GMM), or Expectation-Maximisation (EM) models, or Recurrent Neural Networks (RNN) models.

4. Safety device (1) as in any preceding claim, **characterised by the fact that** said deterministic portion (131) is configured to compare said at least a first part (K1) of said parameters (K) with predetermined thresholds.

5. Safety device (1) as in any preceding claim, **characterised by the fact that** said sensor means (11) comprise optical sensors configured to capture images of said machine (100).

6. Safety device (1) as in any preceding claim, **characterised in that** said sensor means (11) are configured to detect physical quantities associated with the operation of an electric motor and/or a load moved by said electric motor wherein said parameters (K) are calculated on the basis of said physical quantities.

7. Safety procedure for detecting a hazardous situation in an industrial machine or plant (100) and for activating a safety function of that machine (100) if that hazardous situation is detected,
in which this procedure comprises the following steps:
- detect one or more parameters (K) of that machine (100) associated with that hazardous situation;
- process these parameters (K) in order to detect this dangerous situation;
**characterised by the fact that** at least a first part (K1) of said parameters (K) is processed according to a deterministic model and at least a second part (K2) of said parameters (K) is processed according to a probabilistic model.

8. Safety procedure as in claim 7, **characterised by the fact that** it also comprises a transmission step of safely transmitting a safety signal (S) to activate a safety function of said machine (100) if said dangerous condition is detected.

9. Safety procedure as in claim 8, **characterised by the fact that** said safety signal (S) is transmitted if at least one of said deterministic model and said probabilistic model detects said dangerous situation.

10. Safety procedure (1) as in claim 9, **characterised in that** said second part (K2) of said parameters (K) is processed in accordance with said probabilistic model if a previous processing of said first part (K1) of said parameters (K) in accordance with a deterministic model does not detect said dangerous situation.
